# EUROPÄISCHE PATENTSCHRIFT

(11) **EP 2 380 521 B1**
(45) Veröffentlichungstag und Bekanntmachung des Hinweises auf die Patenterteilung: **18.05.2016**
(21) Anmeldenummer: 11002146.6
(22) Anmeldetag: 15.03.2011
(51) Int. Cl.: A61C 3/00

(54) **Dentalwerkzeughandgriff sowie hierzu passendes Dentalwerkzeug**
Dental tool handle and dental tool for the same
Poignée d'outil dentaire et outil dentaire associé

(30) Priorität: 20.04.2010 DE 202010005877 U
(43) Veröffentlichungstag der Anmeldung: 26.10.2011
(73) Patentinhaber: Gebr. Brasseler GmbH & Co. KG, D-32657 Lemgo (DE)
(72) Erfinder: Krumsiek, Michael, 32657 Lemgo (DE); Cakir, Ömer, 32657 Lemgo (DE)
(74) Vertreter: Hoefer & Partner Patentanwälte mbB

(56) Entgegenhaltungen:
- WO-A1-03/022136
- WO-A1-2009/014746
- US-A- 4 060 897
- US-A1- 2010 009 315

## Beschreibung

Die Erfindung bezieht sich auf einen Dentalwerkzeughandgriff mit einem länglichen Griffkörper, an dessen Endbereich ein Werkzeug angeordnet ist.

Weiterhin betrifft die Erfindung ein Dentalwerkzeug, welches lösbar mit dem Dentalwerkzeughandgriff gekoppelt werden kann.

Handgriffe der eingangs genannten Art sind aus dem Stand der Technik bekannt. Sie dienen dazu, manuelle Arbeiten eines Zahnarztes zu ermöglichen und/oder mit einem Werkzeug in einem Dentallabor zu arbeiten. Typische Werkzeuge sind dabei solche, mit denen eine rotierende Bewegung durchgeführt werden kann, beispielsweise Schraubendreher, Mehrkant-Werkzeuge oder Ähnliches. Weiterhin sind Dentalwerkzeuge bekannt, welche zur Präparation eingesetzt werden können, beispielsweise, um am Zahnhals oder am Zahnfleisch zu arbeiten oder bei Implantatvorgängen oder in der Kieferchirurgie eingesetzt zu werden. Insbesondere für die Vorbereitung und Behandlung des Kieferknochens für eine spätere Implantation werden derartige Werkzeuge benötigt.

Aus dem Stand der Technik ist es bekannt, jedes Werkzeug mit einem separaten Handgriff auszurüsten und/oder mehrere Handgriffe für unterschiedliche Werkzeuge zur Verfügung zu haben. Dabei erweist es sich als nachteilig, dass die Handgriffe selbst, bedingt durch ihre Größe, einen erheblichen Platz einnehmen und somit den Ablagebereich oder Arbeitsbereich belasten. Ein weiterer Nachteil besteht darin, dass ein Zahnarzt diese mehreren Handgriffe kaufen muss, wodurch sich die Kosten erhöhen. Auch bei der Reinigung/Aufbereitung entsteht durch mehrere Handgriffe ein zusätzlicher Aufwand.

Die US 4 060 897 A offenbart ein Dentalwerkzeug mit einem Handgriff, dessen beide Enden jeweils mit einem Gewinde versehen sind. Ein Ende des Handgriffs trägt ein Innengewinde, während das andere Ende mit einem Außengewinde-Stift versehen ist. Somit ist es möglich, an den beiden unterschiedlichen, einander gegenüber liegenden Enden des Handgriffs unterschiedliche Werkzeuge lösbar zu befestigen.

Aus der WO 03/022136 A1 ist ein Dentalwerkzeugset vorbekannt, bei welchem bei Handgriff 10 an seinem einen Ende eine Gewindeausnehmung zum Einschrauben eines Werkzeugs aufweist, während das andere Ende mit einer Kupplungsvorrichtung versehen ist. Diese weist eine aufschraubbare Hülse auf, um ein Kugelgelenk eines Werkzeuges zu klammen.

Die US 2010/009315 A1 zeigt ein Ultraschall-betätigbares Werkzeug, dessen Kupplungsbereich ein Außengewinde aufweist.

Aus der WO 2009/014746 A1 ist ein Werkzeug vorbekannt, welches an einem Endbereich elastische Greifarme aufweist, um einen Gegenstand zu greifen.

Der Erfindung liegt die Aufgabe zugrunde, einen Dentalwerkzeughandgriff der eingangs genannten Art sowie zu dem Dentalwerkzeughandgriff passende Dentalwerkzeuge zu schaffen, welche unter Vermeidung der Nachteile des Standes der Technik eine hohe Funktionalität aufweisen.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der Dentalwerkzeughandgriff einen länglichen Griffkörper aufweist, der so geschaffen ist, dass er ergonomisch gut gegriffen werden kann. An einem Endbereich des Handgriffs ist ein Kupplungsansatz ausgebildet, an welchem lösbar jeweils ein Werkzeug befestigbar ist. Der Kupplungsansatz ist erfindungsgemäß so ausgebildet, dass er sowohl eine Gewindeausnehmung aufweist als auch an zumindest einer Außenfläche mit einer zur formschlüssigen drehgesicherten Verbindung mit einem Werkzeug ausgebildeten Struktur versehen ist.

Der erfindungsgemäße Dentalwerkzeughandgriff weist somit u.a. den Vorteil auf, dass er mit unterschiedlichsten Werkzeugen bestückt werden kann. Durch die drehgesicherte Verbindung mit der formschlüssigen Struktur können Werkzeuge mit dem Handgriff gekoppelt werden, welche für eine Drehbewegung genutzt werden, beispielsweise Schraubendreher unterschiedlichster Art sowie Mehrkantaufsätze mit Außenmehrkant oder Innenmehrkant, um Schrauben zu drehen oder sonstige Bauelemente auszuschrauben, einzuschrauben oder in Drehung zu versetzen.

Mittels des Gewindes des Kupplungsansatzes ist es möglich, unterschiedliche Werkzeuge, wie etwa Modulatoren einzuschrauben, die beispielsweise zur Übertragung von Hebelkräften oder von Kräften in Axialrichtung des Handgriffes dienen.

Der erfindungsgemäße Dentalwerkzeughandgriff ist somit universell einsetzbar und für unterschiedlichste Dentalwerkzeuge geeignet. Es ist somit nur ein einziger Handgriff erforderlich, um mittels unterschiedlichster Werkzeuge unterschiedlichste Arbeiten zu verrichten. Dies führt sowohl zur Senkung der Anschaffungskosten als auch zur Senkung des Platzbedarfs und ermöglicht es dem Zahnarzt, mit einem einzigen, für seine Zwecke optimierten Handgriff auszukommen.

Ein besonderer Vorteil der erfindungsgemäßen Ausgestaltung liegt darin, dass der Handgriff, bedingt durch den universell einsetzbaren Kupplungsansatz, so ausgebildet ist, dass er problemlos und zuverlässig wieder aufbereitet werden kann. Eine Reinigung, Desinfektion oder Sterilisation ist somit in einfacher Weise möglich, da keine mehrteilige Konstruktion vorliegt. Das erfindungsgemäße einstückige Design vermeidet somit Fügeflächen, hinterschnittene Flächen oder Ähnliches. Weiterhin sind keine Dichtungselemente, wie etwa O-Ringe oder Ähnliches, erforderlich.

In besonders günstiger Weiterbildung der Erfindung ist vorgesehen, dass der Kupplungsansatz im Wesentlichen zylindrisch ausgebildet ist, wobei die Gewindeausnehmung zentrisch angeordnet ist und der Kupplungsansatz bevorzugt an seiner Außenkontur die Form eines Mehrkants aufweist, beispielsweise eines Sechskants oder Achtkants. Hierdurch ist eine optimale Anpassung an unterschiedlichste Dentalwerkzeuge, welche mit dem Handgriff gekoppelt werden können, ermöglicht. Das Gewinde kann erfindungsgemäß zylindrisch oder konisch ausgebildet sein.

Besonders günstig ist es, wenn der Kupplungsansatz mit einer Axialsicherungsvorrichtung versehen ist, bevorzugt in Form einer Rastausnehmung, um eine Axialsicherung der Werkzeuge, insbesondere von zur Drehung eingesetzten Werkzeugen, wie etwa Schraubendrehern, zu ermöglichen.

Die Erfindung bezieht sich weiterhin auf ein Dentalwerkzeug mit einem Arbeitsteil, welches an einem Schaftbereich befestigt ist, wobei der Schaft ein Befestigungsende umfasst, welches lösbar mit einem Dentalwerkzeughandgriff der vorbeschriebenen Art verbindbar ist. Erfindungsgemäß sind somit unterschiedlichste Dentalwerkzeuge realisiert, welche mit dem Handgriff lösbar gekoppelt werden können. Das Befestigungsende des Dentalwerkzeugs kann dabei entweder einen Gewindeansatz (zylindrisch oder konisch) aufweisen oder mit einer formschlüssigen, eine Drehbewegung sichernden Ausnehmung versehen sein, in welche beispielsweise der Außenmehrkant des Kupplungsansatzes des Handgriffs einschiebbar ist. Dabei ist es besonders vorteilhaft, wenn an dem Dentalwerkzeug eine Axialsicherungsvorrichtung vorgesehen ist, beispielsweise bevorzugt als bewegbare Rastnase.

Auch die Dentalwerkzeuge selbst können somit in einfacher Weise so ausgebildet sein, dass sie zuverlässig und problemlos wieder aufbereitet werden können.

Im Folgenden wird die Erfindung anhand von Ausführungsbeispielen in Verbindung mit der Zeichnung beschrieben. Dabei zeigt:
- Fig. 1: eine vereinfachte Anordnung eines erfindungsgemäßen Dentalwerkzeughandgriffs mit unterschiedlichen Werkzeugen,

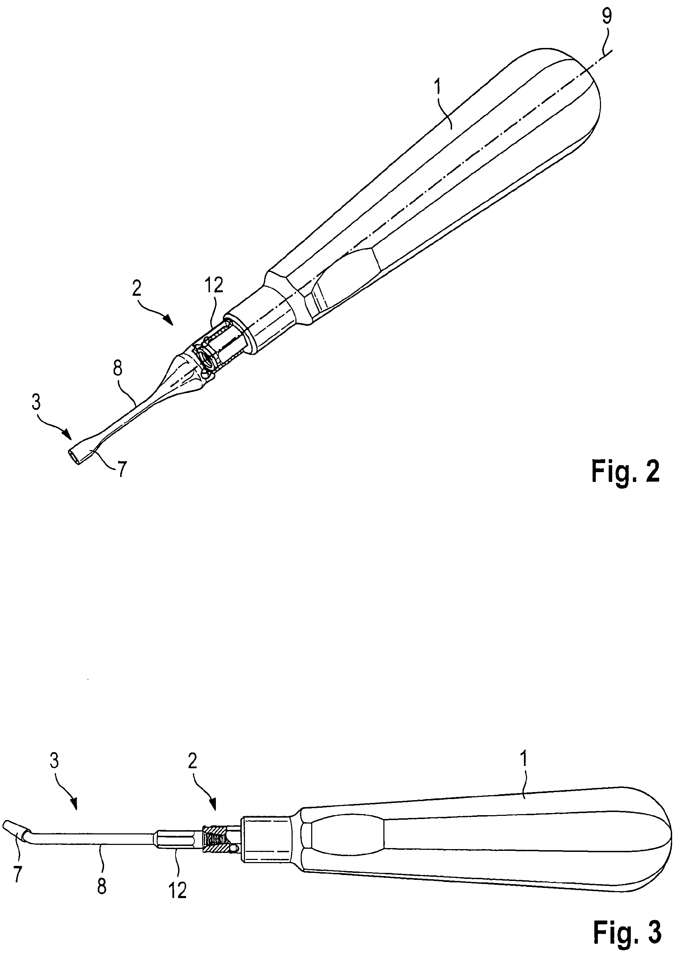

- Fig. 2: eine perspektivische Ansicht des in Fig. 1 gezeigten Dentalwerkzeughandgriffs, teils in geschnittenem Zustand, mit einem Drehwerkzeug,
- Fig. 3: eine Darstellung, analog Fig. 2, mit einem eingeschraubten Werkzeug,
- Fig. 4: eine vergrößerte Schnittansicht der Darstellung des Kupplungsansatzes gemäß dem Ausführungsbeispiel der Fig. 3, und
- Fig. 5: eine vergrößerte perspektivische Ansicht des in Fig. 2 gezeigten Kupplungsansatzes.

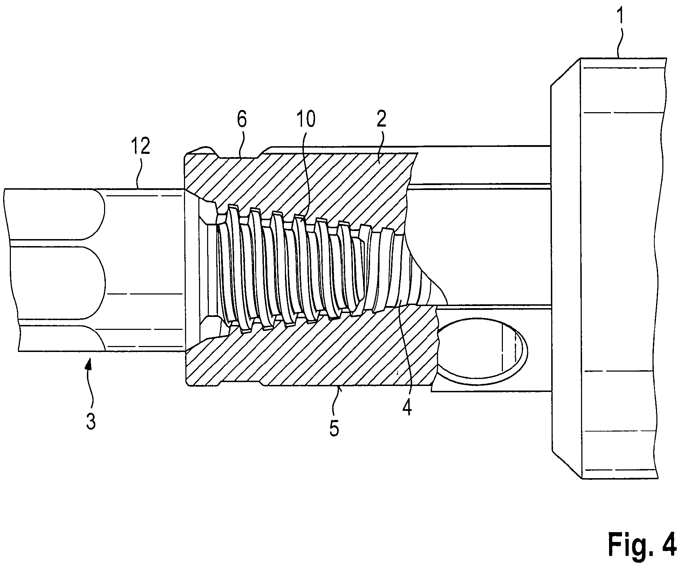

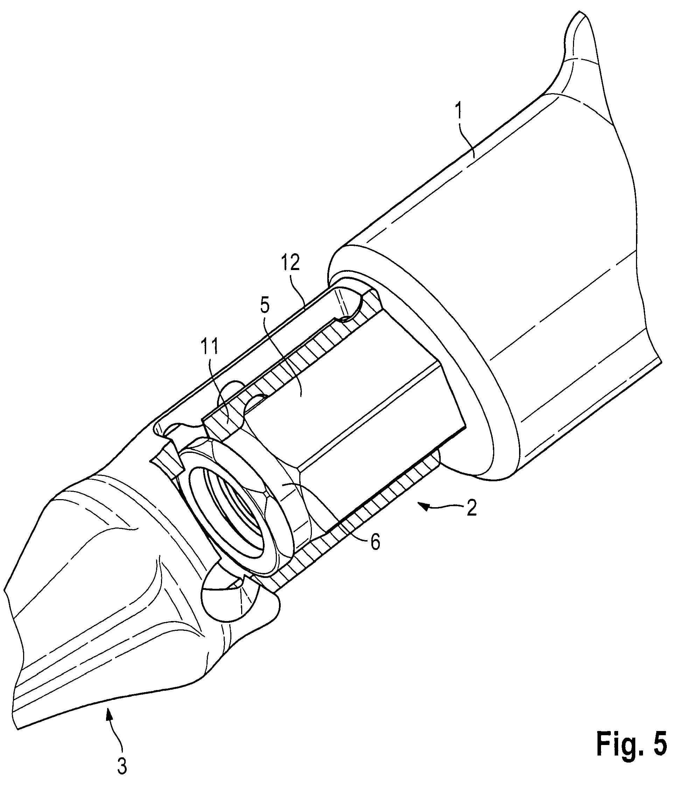

Die Figuren zeigen jeweils einen länglichen Griffkörper 1, der ergonomisch ausgebildet ist und beispielsweise von einem Zahnarzt gut gegriffen werden kann. Der Griffkörper 1 weist an seinem vorderen Ende einen Kupplungsansatz 2 auf, welcher, wie insbesondere in den Fig. 4 und 5 ersichtlich ist, eine im Wesentlichen längliche, über die Länge einen gleichbleibenden Querschnitt aufweisende Struktur hat und an seiner Außenfläche mit einer zur formschlüssigen drehsichernden Verbindung ausgebildeten Struktur 5 versehen ist, beispielsweise in Form eines Sechskants oder Achtkants. Eine dreidimensionale einhüllende Kurve würde somit im Wesentlichen zylindrisch ausgebildet sein.

Koaxial zu einer Mittelachse des Griffkörpers 1 ist eine Gewindeausnehmung 4 vorgesehen (siehe Fig. 4), welche zylindrisch oder, wie in Fig. 4 gezeigt, konisch ausgebildet ist.

Zur Sicherung in Axialrichtung (bezogen auf die Mittelachse 9) ist an dem Kupplungsansatz 2 eine Rastausnehmung 9 ausgebildet, welche beispielsweise in Form einer Teil-Ringnut ausgebildet sein kann.

An dem Kupplungsansatz 2 sind unterschiedliche Werkzeuge 3 koppelbar, welche entweder einen Gewindeansatz 10 aufweisen, der in die Gewindeausnehmung 4 einschraubbar ist (Fig. 4) oder mit einer Ausnehmung versehen sind, in welche drehgesichert die Struktur 5 einsteckbar ist (Fig. 5). In diesem Falle können Drehbewegungen über den Griffkörper 1 auf das Werkzeug 3 bzw. auf dessen Arbeitsteil 7 übertragen werden.

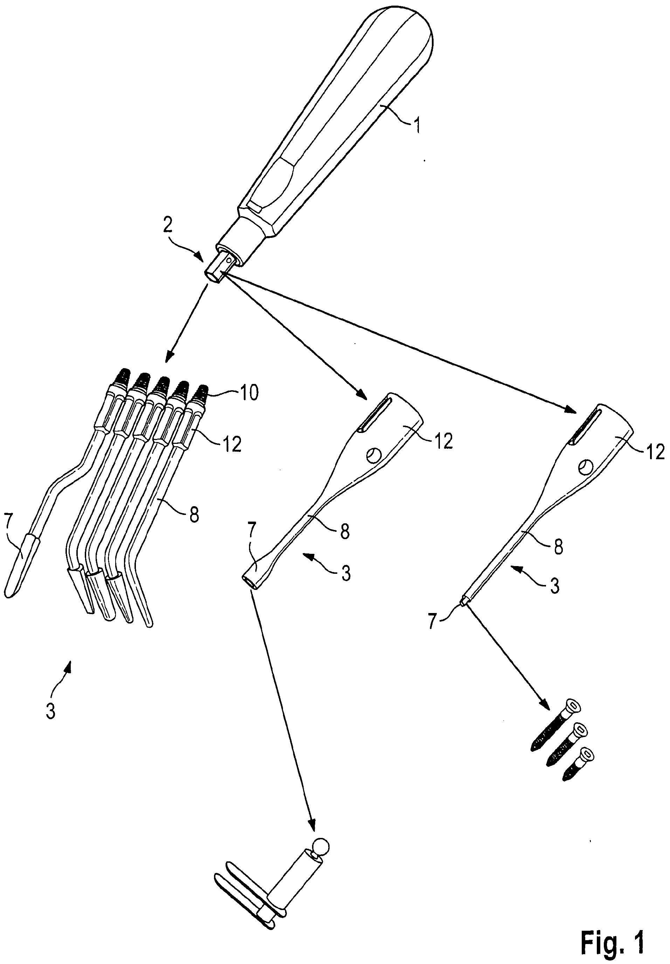

Wie in Fig. 1 gezeigt, sind somit unterschiedlichste Werkzeuge 3 mit dem Griffkörper 1 koppelbar, welche beispielsweise als Modulatoren für die Vorbereitung und Behandlung eines Kieferknochens ausgebildet sein können (linke Bildhälfte der Fig. 1), oder als Schraubendreher oder zur Betätigung von schraubenähnlichen Konstruktionen (rechte Bildhälfte der Fig. 1).

Zur Axialsicherung kann an dem Werkzeug 3 eine Rastnase 11 ausgebildet sein (siehe Fig. 5), welche mit der Rastausnehmung 6 in Eingriff bringbar ist.

### Bezugszeichenliste

- 1: Griffkörper
- 2: Kupplungsansatz
- 3: Werkzeug
- 4: Gewindeausnehmung
- 5: Struktur
- 6: Rastausnehmung
- 7: Arbeitsteil
- 8: Schaftbereich
- 9: Mittelachse
- 10: Gewindeansatz
- 11: Rastnase
- 12: Befestigungsende

## Patentansprüche

1. Dentalwerkzeughandgriff mit einem länglichen, ergonomisch ausgebildeten Griffkörper (1), an dessen einem Endbereich ein Kupplungsansatz (2) ausgebildet ist, an welchem lösbar jeweils ein Werkzeug (3) befestigbar ist, wobei der Kupplungsansatz (2) sowohl eine Gewindeausnehmung (4) aufweist als auch an zumindest einer Außenfläche mit einer in Form eines Außenmehrkants ausgebildeten Struktur (5) versehen ist, welche formschlüssig drehgesichert mit einem Werkzeug (3) in Eingriff bringbar ist, **dadurch gekennzeichnet, dass** der Kupplungsansatz (2) an seiner Außenfläche mit einer in Form einer Rastausnehmung (6) ausgebildeten Axialsicherungsvorrichtung versehen ist.

2. Handgriff nach Anspruch 1, **dadurch gekennzeichnet, dass** der Kupplungsansatz im Wesentlichen zylindrisch ausgebildet ist, wobei die Gewindeausnehmung (4) zentrisch angeordnet ist.

3. Handgriff nach einem der Ansprüche 1 oder 2, **dadurch gekennzeichnet, dass** die Gewindeausnehmung (4) zylindrisch oder konisch ausgebildet ist.

4. Handgriff nach einem der Ansprüche 1 bis 3, **dadurch gekennzeichnet, dass** die Gewindeausnehmung (4) ein- oder mehrgängig ausgebildet ist.

5. Dentalwerkzeug (3) mit einem Arbeitsteil (7), welcher an einem Schaftbereich (8) befestigt ist, wobei der Schaftbereich (8) ein Befestigungsende (12) umfasst, welches lösbar mit einem Dentalwerkzeughandgriff nach einem der Ansprüche 1 bis 5 verbunden ist.

6. Dentalwerkzeug nach Anspruch 5, **dadurch gekennzeichnet, dass** das Befestigungsende (12) einen Gewindeansatz aufweist.

7. Dentalwerkzeug nach Anspruch 5, **dadurch gekennzeichnet, dass** das Befestigungsende (12) eine formschlüssige, eine Drehbewegung sichernde Ausnehmung aufweist.

8. Dentalwerkzeug nach Anspruch 7, **dadurch gekennzeichnet, dass** dieses am Befestigungsende (12) eine Axialsicherungsvorrichtung, bevorzugt eine Rastnase (11), aufweist.

## Claims

1. Dental tool handle with an elongated, ergonomically designed handle body (1), one end area of which has formed thereon a coupling attachment (2) to which a respective tool (3) can be detachably fastened, wherein the coupling attachment (2) comprises a threaded recess (3) and is provided on at least one outer surface with a structure (5) designed in the form of an outer polygon, which is engageable in a form-fit and rotation-secured manner with a tool (3), **characterized in that** the coupling attachment (2) is provided on its outer surface with an axial securing device designed in the form of a locking recess (5).

2. Handle according to claim 1, **characterized in that** the coupling attachment is made substantially cylindrical, wherein the threaded recess (4) is centrally arranged.

3. Handle according to any one of claims 1 or 2, **characterized in that** the threaded recess (4) is made cylindrical or conical.

4. Handle according to any one of claims 1 to 3, **characterized in that** the threaded recess (4) is formed with a single or with multiple threads.

5. Dental tool (3) with a work part (7) which is fastened to a shaft portion (8), wherein the shaft portion (8) comprises a fastening end (12) which is detachably connected to a dental tool handle according to any one of claims 1 to 5.

6. Dental tool according to claim 5, **characterized in that** the fastening end (12) comprises a threaded attachment.

7. Dental tool according to claim 5, **characterized in that** the fastening end (12) comprises a form-fit and rotational motion-securing recess.

8. Dental tool according to claim 7, **characterized in that** said tool comprises an axial securing device, preferably a locking nose (11) at the fastening end (12).

## Revendications

1. Poignée d'outil dentaire avec un corps de préhension (1) oblong réalisé de manière ergonomique, sur une zone d'extrémité duquel une saillie de couplage (2) est réalisée, sur laquelle un outil (3) peut être fixé respectivement de manière détachable, la saillie de couplage (2) présentant non seulement un évidement fileté (4) mais aussi étant pourvue, sur au moins une surface extérieure, d'une structure (5) réalisée sous la forme d'un polygone extérieur, qui peut être amenée en engagement en étant protégée contre la rotation par complémentarité de formes avec un outil (3), **caractérisée en ce que** la saillie de couplage (2) est pourvue sur sa surface extérieure d'un dispositif de blocage axial réalisé sous la forme d'un évidement d'encliquetage (6).

2. Poignée selon la revendication 1, **caractérisée en ce que** la saillie de couplage est réalisée de manière sensiblement cylindrique, l'évidement fileté (4) étant agencé de manière centrale.

3. Poignée selon l'une quelconque des revendications 1 ou 2, **caractérisée en ce que** l'évidement fileté (4) est réalisé de manière cylindrique ou conique.

4. Poignée selon l'une quelconque des revendications 1 à 3, **caractérisée en ce que** l'évidement fileté (4) est réalisé à un ou plusieurs pas.

5. Outil dentaire (3) avec une partie fonctionnelle (7) qui est fixée sur une zone de tige (8), la zone de tige (8) comportant une extrémité de fixation (12) qui est reliée de manière détachable à une poignée d'outil dentaire selon l'une quelconque des revendications 1 à 5.

6. Outil dentaire selon la revendication 5, **caractérisé en ce que** l'extrémité de fixation (12) présente une saillie filetée.

7. Outil dentaire selon la revendication 5, **caractérisé en ce que** l'extrémité de fixation (12) présente un évidement à complémentarité de formes, bloquant un mouvement de rotation.

8. Outil dentaire selon la revendication 7, **caractérisé en ce que** celui-ci présente sur une extrémité de fixation (12) un dispositif de blocage axial, de préférence un nez d'encliquetage (11).
